# FASCICULE DE BREVET EUROPEEN

(11) **EP 3 184 153 B1**
(45) Date de publication et mention de la délivrance du brevet: **15.08.2018**
(21) Numéro de dépôt: 16206139.4
(22) Date de dépôt: 22.12.2016
(51) Int. Cl.: A63B 45/00, A63B 37/00, A63B 67/06, B29C 65/16, B23K 26/20, B21K 17/00, B21D 51/08, B23K 26/28, B24B 39/02

(54) **PROCÉDÉ DE FABRICATION DE BOULE DE JEU**
HERSTELLUNGSVERFAHREN VON SPIELKUGELN
METHOD FOR PRODUCING A BOWLING BALL

(30) Priorité: 22.12.2015 FR 1563155
(43) Date de publication de la demande: 28.06.2017
(73) Titulaire: La Boule Obut, 42380 Saint Bonnet le Château (FR)
(72) Inventeur: SOUVIGNET, Pierre, 42170 SAINT JUST SAINT RAMBERT (FR)
(74) Mandataire: Delorme, Nicolas

(56) Documents cités:
- EP-A2- 0 302 283
- FR-A1- 2 795 010

## Description

La présente invention concerne un procédé de fabrication d'une boule de jeu, notamment une boule de pétanque.

Il est connu de fabriquer des boules de pétanque à partir de deux coquilles hémisphériques en acier.

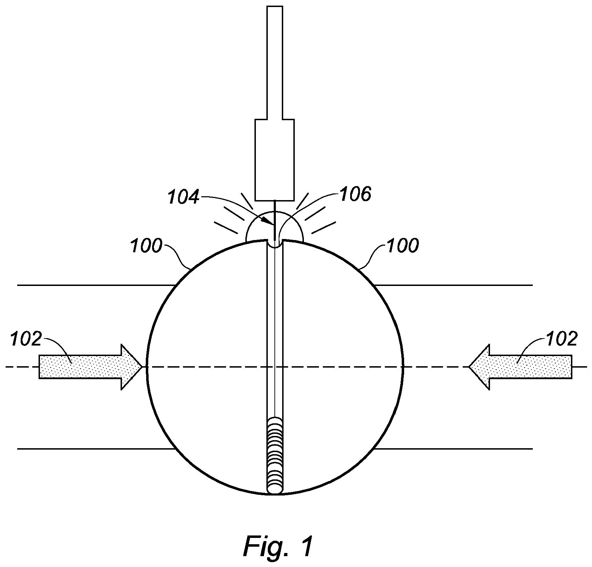

Comme illustré sur la figure 1, les deux coquilles 100 hémisphériques sont positionnées en regard puis plaquées l'une contre l'autre par l'intermédiaire de deux mors exerçant des poussées contraires représentées par les flèches 102.

Le soudage des deux coquilles hémisphériques est traditionnellement réalisé par une technique de soudage MAG (de l'acronyme anglais « Metal active gas ») consistant en l'application d'un arc électrique entre un fil 104 électrode fusible et les parties de coquilles 100 hémisphériques à souder, dans une atmosphère de protection composée de gaz actifs.

Cependant, cette technique de soudage MAG nécessite l'emploi de consommables : fil 104 électrode fusible et gaz acifs de protection. Ces consommables impliquent un coût de fabrication et un impact environnemental.

De plus, la présence de gaz actifs est contraignante, du fait des risques, notamment en termes d'inflammabilité, d'inhalation et de la nécessité de travailler en conséquence avec des équipements sous pressions et avec des dispositifs de traitement des fumées.

Par ailleurs, le soudage MAG génère, dans une zone située autour du cordon de soudure, appelée ZAT (zone affectée thermiquement), des variations de dureté, qui peuvent provoquer des défauts de fabrication au cours d'une étape d'usinage ultérieure.

Aussi, l'élévation de température au niveau de la zone à souder se transmet à l'air situé à l'intérieur des deux coquilles 100 hémisphériques. La pression à l'intérieur des deux coquilles 100 augmente et l'air présent à l'intérieur tend à s'échapper hors des coquilles 100 en perçant le métal en fusion au niveau du cordon de soudure. En conséquence, des trous peuvent se former à travers le cordon de soudure. Cette présence de porosité peut fragiliser la boule obtenue et peut engendrer des difficultés avec les opérations ultérieures.

Un autre inconvénient de l'étape de soudage des procédés de fabrication actuels est que l'étape de soudage MAG peut être difficile à contrôler et à régler, car sensible à la température ambiante et à l'humidité. De plus, lorsque la bobine de fil 104 à souder se termine, le raccord entre deux bobines est délicat et requiert un réglage qui peut être fastidieux (fil d'apport issu de coulées différentes).

De surcroît, cet apport de matière qui se mêle à la matière des coquilles 100 hémisphériques génère une zone aux propriétés relativement hétérogènes.

Il résulte de ces inconvénients que l'étape de soudage des procédés de fabrication existants est l'étape qui génère en général le plus de rebuts lors de la fabrication.

Par ailleurs, pour compenser rapport de matière inhérent au soudage MAG, il est classiquement prévu de réaliser, avant l'opération de soudage MAG, un chanfrein 106 sur chacune des deux coquilles 100 hémisphériques, dans la partie où sera effectué le cordon de soudure. Ainsi, le soudage MAG impose une étape prélable d'usinage des coquilles 100.

Enfin, les boules de jeu sont classiquement réalisées à partir d'acier au carbone. Pour éviter l'oxydation de cet acier, le procédé de fabrication comprend une étape finale de traitement de surface au cours de laquelle l'acier de la boule est revêtu d'une couche de chrome offrant une isolation au milieu extérieur. Cependant, ce traitement de surface à base de chrome impose certaines contraintes environnementales.

Il est connu du document de brevet FR2795010 un procédé pour réaliser des boules de pétanque au moyen d'un faisceau laser. Toutefois, un inconvénient dû à la pénétration en profondeur du laser à l'interface des deux demi-coquilles, au niveau du cordon de soudure, est une fusion de la matière sur la totalité de cette interface. Cela peut entraîner des projections de métal fondu à l'intérieur de la boule formée par les deux demi-coquilles. Ces projections risquent ensuite de se détacher lors d'une utilisation de la boule et créer des grelots à l'intérieur de la boule.

Aussi, la présente invention vise à pallier tout ou partie de ces inconvénients en proposant un procédé de fabrication d'une boule de jeu offrant des performances améliorées, notamment lors de l'opération de soudage, de manière à limiter les rebuts, ainsi qu'un coût et un impact environnemental réduits, tout en évitant l'apparition de grelots.

A cet effet, la présente invention a pour objet un procédé de fabrication d'une boule de jeu, selon la revendication 1. Ainsi, le procédé selon l'invention ne nécessite pas de métal d'apport, ni de gaz actifs, ce qui réduit les coûts et contraintes de fabrication. Par ailleurs, la formation d'une surépaisseur interne permet d'empêcher la pénétration du laser sur toute la profondeur de l'interface de soudage, si bien que le risque de projection de métal fondu à l'intérieur de la boule est sensiblement limité, ce qui évite la formation ultérieure de grelots, et ce sans sourcût excessif, notamment de matière.

De plus, l'apport de chaleur est plus ciblé et localisé que pour un soudage MAG, si bien que le soudage laser évite de générer une zone affectée thermiquement (ZAT) importante. Cela permet aussi de limiter l'échauffement de l'air contenu dans les coquilles hémisphériques et donc de générer une porosité au niveau du cordon de soudure. Ainsi, l'étape de soudage laser améliore la performance de l'opération de soudage et permet de limiter sensiblement les rebuts.

Aussi, le soudage laser permet de s'affranchir de l'étape préalable d'usinage pour réaliser un profil chanfreiné, ce qui réduit les coûts.

Selon un mode de réalisation préféré, les deux coquilles hémisphériques comprennent un acier inoxydable austénitique.

Le fait d'utiliser des coquilles élaborées à partir d'un acier inoxydable austénitique permet d'éviter l'apparation de fissures ou zones de fragilité trop importantes dans la boule obtenue. En effet, un soudage laser sur des coquilles en acier carbone traditionnelles génère habituellement des fragilités trop importantes qui conduisent à des rebuts. Cette caractéristique améliore donc la fiabilité et la performance du procédé. De plus, le fait de disposer au final d'une boule de jeu en acier inoxydable austénitique permet de s'affranchir de l'étape finale de traitement de surface par revêtement d'une couche de chrome. Cela limite donc la complexité du procédé de fabrication et l'impact environnemental.

Selon un mode de réalisation préféré, avant l'étape de soudage, le procédé comprend une étape de galetage d'un plan de joint orthogonal à l'axe de révolution de chaque coquille hémisphérique.

L'étape de galetage permet de réaliser de manière fiable et précise un plan de joint droit, parfaitement plan, pour réaliser un appui plan de qualité des coquilles hémipshériques positionnées l'une contre l'autre, et donc améliorer la précision du tir laser. Cela permet d'une part obtenir une soudure de qualité sur une ligne de soudure circulaire, et d'autre part d'éviter la création d'une zone affectée thermiquement trop importante.

Le galetage permet en outre d'obtenir un plan de joint qui limite la pénétration de la soudure laser dans la matière. Cela limite l'échauffement de l'air dans les coquilles, donc la création de porosité, et évite la formation de « grelots », c'est-à-dire la pénétration de petites quantités de matière à l'intérieur de la cavité de la boule.

Enfin, le galetage n'implique pas de perte de matière, contrairement à un usinage.

Selon un mode de réalisation préféré, l'étape de positionnement comprend l'emboîtement d'une surépaisseur de chaque coquille hémisphérique dans un logement de forme complémentaire d'une pièce de support.

Cette caractéristique assure le positionnement des plans de joints parallèlement au faisceau laser, afin de garantir que le faisceau laser frappe précisément la zone de soudure sur toute la circonférence de la boule.

Selon un mode de réalisation préféré, les surépaisseurs sont formées pendant l'étape de galetage du plan de joint de chaque coquille hémisphérique.

Cela limite les coûts et la durée de fabrication.

Selon un mode de réalisation préféré, l'étape de soudage comprend l'émission d'un faisceau laser fixe et la mise en rotation de la boule autour de l'axe de révolution des coquilles hémisphériques.

Cette mise en mouvement préférée des coquilles par rapport au laser contribue à une précision améliorée de la zone ciblée par le laser, ce qui évite les phénomènes indésirés de zone affectée thermiquement, porosité, etc. et améliore ainsi la performance de l'étape de soudage.

Selon un mode de réalisation préféré, l'étape de soudage comprend l'émission d'un faisceau laser orthogonal au plan tangent au point d'impact du faisceau laser sur la boule.

Ainsi, la superficie du point d'impact du faisceau laser est minimale, ce qui réduit significativement la zone affectée thermiquement.

Selon un mode de réalisation préféré, l'étape de soudage comprend l'émission d'un faisceau laser par une torche de soudure laser, et le déclenchement de l'émission du faisceau laser est postérieure au déclenchement d'un déplacement relatif de la boule et de la torche de soudure laser.

Cette caractéristique limite la pénétration de la soudure laser à travers la matière, ce qui évite la formation de porosité et le phénomène de grelots. L'étape de soudage est ainsi plus performante.

Selon un mode de réalisation préféré, le procédé comprend une étape de calibrage destinée à uniformiser une cote entre un sommet et un plan de joint de chaque coquille hémisphérique.

Cette caractéristique améliore davantage encore la fiabilité et la précision du soudage laser, de sorte que seule l'interface des deux coquilles soit impactée par le laser.

Selon un mode de réalisation préféré, l'étape d'obtention de deux coquilles hémisphériques comprend une étape d'écrouissage des coquilles au moment de leur mise en forme.

Cette caractéristique permet de durcir les coquilles et donc de s'affranchir d'une étape de traitement thermique, classiquement une trempe, pour obtenir un durcissement de la boule après soudage des coquilles. Le procédé est donc avantageusement dépourvu d'étape de traitement thermique.

D'autres caractéristiques et avantages de la présente invention ressortiront clairement de la description détaillée ci-après d'un mode de réalisation, donné à titre d'exemple non limitatif, en référence aux dessins annexés dans lesquels :
- La figure 1 est une vue schématique d'un procédé de fabrication d'une boule de jeu selon l'état de la technique,
- La figure 2 est une vue schématique d'un procédé de fabrication d'une boule de jeu selon un mode de réalisation de l'invention,
- La figure 3 est une vue en coupe d'un profil de coquilles hémisphériques d'un procédé de fabrication d'une boule de jeu selon un mode de réalisation de l'invention,
- La figure 4 est une vue schématique et de côté d'une coquille utilisée dans le procédé de fabrication d'une boule de jeu selon un mode de réalisation de l'invention,
- Les figures 5 et 6 sont des vues schématiques et de côté d'une étape d'un procédé de fabrication d'une boule de jeu selon un mode de réalisation de l'invention.

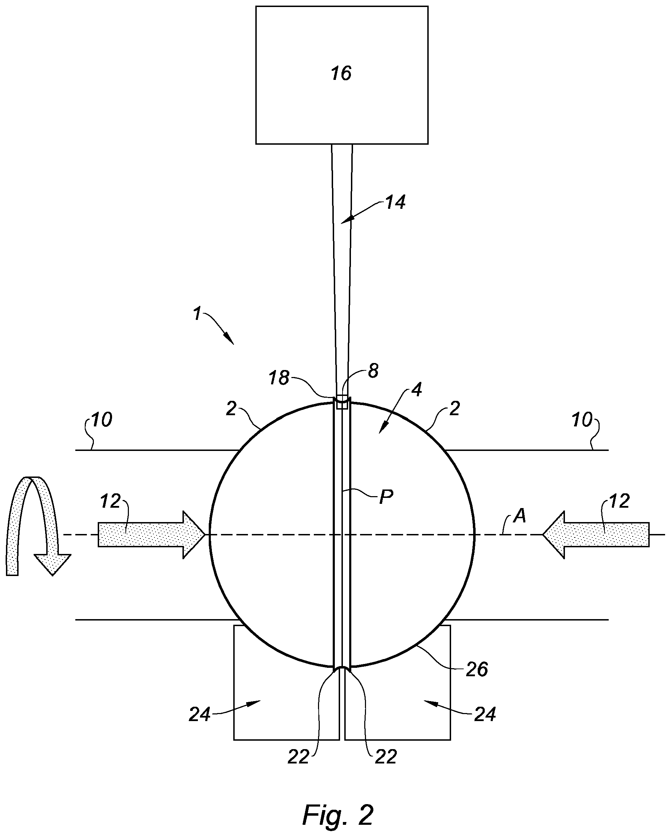

La figure 2 montre un schéma illustrant un procédé de fabrication d'une boule de jeu selon un mode de réalisation de l'invention. Le procédé de fabrication est destiné à la fabrication d'une boule 1 de jeu, comme par exemple une boule de pétanque.

Dans la présente demande, on notera que boule de jeu ou boule de pétanque peut désigner aussi bien une sphère pleine qu'une sphère creuse.

Une première étape du procédé de fabrication est l'obtention de deux coquilles 2 de forme hémisphérique, destinées à être assemblées pour obtenir la boule 1 de jeu.

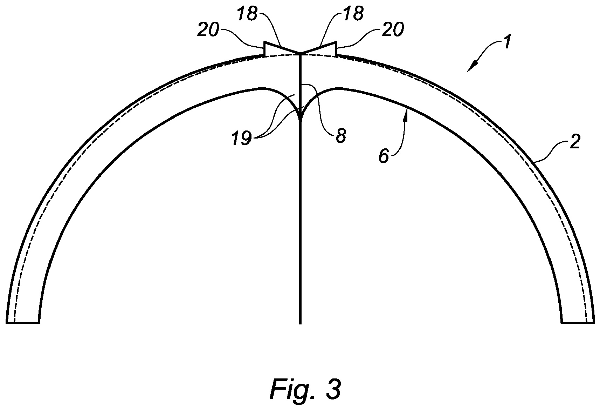

Les coquilles 2 sont ici métalliques. Chaque coquille 2 peut correspondre à une moitié de la boule 1 de jeu. Les coquilles 2 sont avantageusement creuses, comme illustrées sur les figures 2 et 3. Les coquilles 2 peuvent présenter une face 4 externe convexe sphérique, et une face 6 interne. La face 6 interne est de préférence concave, et notamment sphérique. L'épaisseur des coquilles 2 est de préférence sensiblement constante. Cette épaisseur est avantageusement similaire pour chacune des coquilles 2.

Comme illustré sur la figure 2, les coquilles 2 présentent un plan de joint 8, s'étendant ici de manière circulaire, destiné à venir en appui contre le plan de joint 8 de l'autre coquille 2 en vue d'assembler les deux coquilles 2.

Le plan de joint 8 peut faire la jonction entre les faces 4, 6 externe et interne.

Chaque coquille 2 peut être obtenue à partir d'un lopin de métal qui est placé dans une presse, dans laquelle il subit un écrasement, ce qui conduit à l'obtention d'un disque. Alternativement, le disque peut être obtenu par découpe d'une plaque de métal.

Le disque est ensuite placé dans un outillage adapté pour réaliser un emboutissage aboutissant à la formation de la coquille 2 hémisphérique.

De préférence, l'étape de mise en forme des coquilles 2 à partir d'une plaque de métal comprend un écrouissage de chaque coquille 2, afin de permettre leur durcissement. Cet écrouissage peut être réalisé par emboutissage à froid, c'est-à-dire par exemple à température ambiante, permettant de donner à la plaque de métal écrasée ou découpée la forme hémisphérique. Cet écrouissage permet de s'affranchir d'une étape ultérieure de traitement thermique, du type trempe. Le procédé est donc avantageusement exempt d'une étape de traitement thermique destinée à conférer à la boule 1 sa dureté.

Après l'étape d'obtention des coquilles 2 hémisphériques, le procédé comprend une étape de positionnement des coquilles 2 hémisphériques l'une contre l'autre de sorte que les coquilles 2 forment une boule dont le plan équatorial P se confond avantageusement avec les plans de joint 8.

Cette étape est réalisée en plaçant les plans de joint 8 en appui l'un contre. Des mors 10 peuvent être prévus pour exercer sur les coquilles 2 des forces 12 opposées, dans une direction sensiblement orthogonale aux plans de joint 8 des coquilles 2.

L'étape de positionnement comprend avantageusement l'alignement des axes A de révolution respectifs des coquilles 2.

Après l'étape de positionnement des coquilles 2 l'une contre l'autre, le procédé comprend une étape de soudage par laser, sans apport de matière, des deux coquilles 2 hémisphériques, long d'une ligne circulaire, au niveau de leurs plans de joint 8, et plus particulièrement au niveau du plan équatorial P de la boule 1 formée par le plaquage des coquilles 2 l'une contre l'autre.

Cette étape est réalisée par émission d'un faisceau 14 laser, généré par exemple par une torche de soudure laser 16, en direction des plans de joint 8 des coquilles 2, c'est-à-dire à la jonction des coquilles 2. Le faisceau 14 laser s'étend avantageusement dans le plan contenant les plans de joint 8, qui se confond ici avec le plan P équatorial de la boule 1. De plus, le faisceau 14 laser est de préférence normal au plan tangent au point d'impact. Le point d'impact du laser fait un cercle complet au cours de l'étape de soudage.

Pour éviter que le faisceau 14 laser fragilise trop le métal au niveau du cordon des soudure, le procédé peut prévoir de fournir des coquilles 2 élaborées à partir d'un acier inoxydable, en particulier un acier inoxydable austénitique. De plus, l'acier inoxydable, notamment austénitique, permet de s'affranchir d'un revêtement au chrome pour prévenir l'oxydation de la boule 1.

L'étape de soudage comprend un déplacement relatif des deux coquilles 2 et du faisceau 14 laser, plus précisément de la torche 16 de soudure laser.

De préférence, le faisceau 14 laser est fixe tandis que la boule 1 formée des deux coquilles 2 pressées l'une contre l'autre est mobile en rotation autour d'un axe sensiblement orthogonal au faisceau 14 laser et au plan P équatorial, et plus particulièrement selon l'axe A de révolution des coquilles 2. La torche 16 de soudure laser est donc fixe sur le bâti de la soudeuse, et ce sont les coquilles 2 formant la boule 1 qui sont mises en rotation.

A cette fin, les coquilles 2 hémisphériques peuvent être entraînées en rotation par des moyens d'entraînement, comme par exemple les mors 10 qui peuvent être rotatifs et configurés pour faire pivoter simultanément et à la même vitesse les coquilles 2 autour de leur axe A de révolution orthogonal au plan équatorial. On notera que les moyens d'entraînement sont de préférence configurés pour entraîner uniquement les coquilles 2 en rotation autour de l'axe A de révolution, notamment pendant l'émission du faisceau 14 laser, et le cas échéant plaquer les coquilles 2 l'une contre l'autre. Cela permet de disposer de moyens d'entraînement de structure simple.

Les mors 10 peuvent comprendre des moyens d'agrippement, comme par exemple un revêtement en matériau élastomère. Les mors 10 peuvent par ailleurs présenter une paroi 11 concave, de forme sphérique complémentaire des coquilles 2 afin de maintenir celles-ci en position.

Afin de maîtriser la pénétration de la soudure laser dans la matière, et éviter la formation de grelots ou porosité, l'étape de soudage comprend d'abord la mise en déplacement relative des coquilles 2 et de la torche 16 de soudure laser, avant l'émission même du faisceau 14 laser. En d'autres termes, le tir laser est déclenché après que la boule 1 formée des deux coquilles 2 ait été mise en rotation.

Pour assurer que le faisceau 14 laser reste précisément dans le plan P équatorial des coquilles 2, et donc obtenir une soudure de qualité sur tout le diamètre de la boule 1, sans apparition de zone fragile pouvant résulter d'un écartement du point d'impact du faisceau 14 laser par rapport au plan P équatorial des coquilles 2, le procédé comprend avantageusement, avant l'étape de soudage, une étape de refoulement de matière, notamment galetage, puis calibrage, et mise en référence, des plans de joint 8 de chaque coquille 2, de sorte que les plans de joint 8 s'étendent, de préférence uniquement, dans un plan orthogonal à l'axe A de révolution des coquilles 2.

Cette étape de galetage permet en outre l'obtention d'un profil de plan de joint qui permet la maîtrise de la profondeur de pénétration du laser et donc d'éviter la formation de grelots ou porosité, comme cela est décrit plus en détail ci-après.

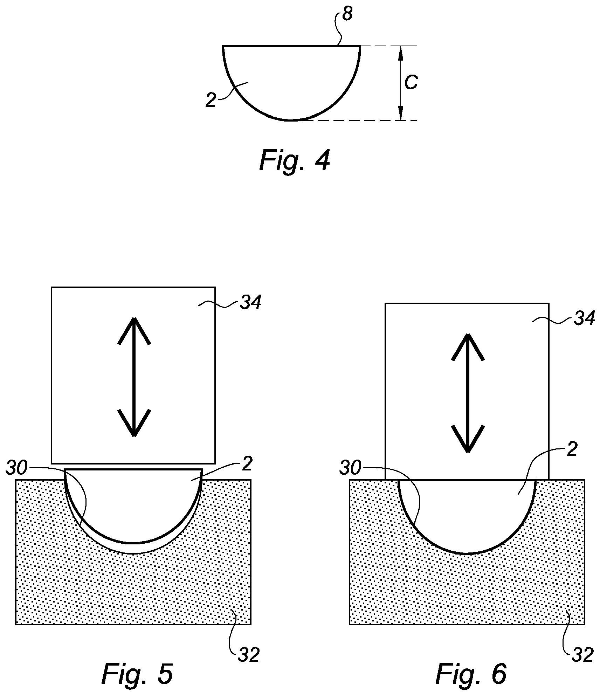

Le procédé comprend avantageusement une étape de calibrage destinée à uniformiser la cote c, visible sur la figure 4, entre le sommet de chaque coquille 2 et le plan de joint 8 . Cette étape de calibrage peut être réalisé après l'étape de refoulement de matière, notamment de galetage. De préférence, comme illustré sur les figures 5 et 6, l'étape de calibrage est réalisée par positionnement de chaque coquille 2 dans une empreinte 30 hémisphérique d'une matrice 32 puis compression de cette coquille 2 au sein de l'empreinte 30 au moyen d'une presse 34. Cette étape de calibrage permet une tolérance très faible et améliore de ce fait la fiabilité du soudage laser.

Aussi, avant l'étape de positionnement, le procédé peut comprendre une étape de formation d'une surépaisseur 18 de positionnement sur la face 4 externe de chaque coquille 2 hémisphérique.

Plus précisément, la surépaisseur 18 est destinée à former une saillie radiale circulaire sur la face 4 externe, de préférence à l'intersection de la face 4 externe et du plan de joint 8, comme illustré sur la figure 3.

La surépaisseur 18 s'étend de manière circulaire dans un plan sensiblement orthogonal à l'axe A de révolution, parallèlement au plan de joint 8.

La surépaisseur 18 peut présenter une épaisseur croissante en s'éloignant du plan de joint 8.

La surépaisseur 18 peut présenter un épaulement 20 orthogonal à l'axe A de révolution. Plus particulièrement, la surépaisseur 20 peut présenter un profil de section transverse sensiblement triangulaire. Un des sommets de ce triangle est situé avantageusement dans le plan de joint 8.

Les surépaisseurs 18 sont avantageusement formées par galetage pendant l'opération de galetage des plans de joint 8.

Par ailleurs, l'étape de positionnement comprend l'emboîtement de la surépaisseur 18 dans un logement ou rainure 22 de forme complémentaire ménagée sur une pièce 24 de support ayant une concavité 26 sphérique destinée à recevoir et supporter une coquille 2.

Deux pièces 24 de support sont ici prévues, une pour chaque coquille 2 hémisphérique.

La coopération par complémentarité de forme des rainures 22 avec les surépaisseurs 18 permet de positionner de façon fiable les plans de joint 8 au droit du faisceau 14 laser avant l'opération de soudage.

Alternativement ou en complément, le procédé peut comprendre une étape de mise en référence aussi destinée à assurer un positionnement précis des plans de joint 8 au droit du laser. Cette étape de mise en référence est par exemple réalisée au moyen d'une plaque de référence, plane, positionnée entre les deux coquilles 2, perpendiculairement à leur axe A de rotation et dans le plan du laser. Les coquilles sont ensuite positionnées relativement à la plaque de référence. Les coquilles 2 peuvent ensuite être plaquées l'une vers l'autre, puis la plaque de référence retirée pour permettre la mise en appui des coquilles 2. Cette mise en référence permet avantageusement de limiter le mouvement des coquilles 2 à un mouvement de rotation pendant l'émission du faisceau 14 laser, pour une question de précision de soudage avec un déplacement relatif réduit au minimum entre la boule 1 et le faisceau 14 laser.

Le procédé comprend la formation d'une surépaisseur 19, visible sur la figure 3, s'étendant vers l'intérieur de la boule 1. Cette étape peut être réalisée par refoulement de matière, par exemple en même temps que l'étape de galetage des plans de joint 8.

La formation de la surépaisseur 19 interne intervient avant l'étape de soudage, de préférence avant l'étape de positionnement des deux coquilles 2 l'une par rapport à l'autre. La surépaisseur 19 interne peut être présente sur chacune des deux coquilles. Cette surépaisseur 19 forme une saillie, en particulier radiale, par rapport à la face 6 interne. Cette surépaisseur 19 est configurée pour s'étendre au niveau du plan 8 de joint des coquilles, du plan équatorial de la boule 1, donc à l'interface des deux coquilles 2 de manière à être positionnée sous le faisecau 14 laser. La surépaisseur 19 s'étend de manière circulaire à l'intérieur de la boule 1, avantageusement sans discontinuer. Les surépaisseurs 19 des coquilles sont de préférence destinées à venir en appui l'une contre l'autre. On notera que la surépaisseur 19 est plus large que la paroi des coquilles 2, ce qui permet de conserver une épaisseur de coquille 2 relativement mince, sans impacter sur la solidité de la soudure, tout en économisant de la matière.

Après l'opération de soudage, on notera que le procédé peut comprendre une étape d'usinage pour faire disparaître les surépaisseurs 18. En outre, la boule 1 peut subir une ou plusieurs autres opérations telles que marquage ou test de dureté ou résistance mécanique.

Bien entendu, l'invention n'est nullement limitée au mode de réalisation décrit ci-dessus, ce mode de réalisation n'ayant été donné qu'à titre d'exemple. Des modifications sont possibles, notamment du point de vue de la constitution des divers éléments ou par la substitution d'équivalents techniques, sans sortir pour autant du domaine de protection de l'invention.

## Revendications

1. Procédé de fabrication d'une boule (1) de jeu, comprenant les étapes :
- d'obtention de deux coquilles (2) hémisphériques,
- de positionnement des deux coquilles (2) hémisphériques l'une contre l'autre de manière à former la boule (1), et
- de soudage des deux coquilles (2) hémisphériques, dans lequel l'étape de soudage est une étape de soudage laser,
**caractérisé en ce que** le procédé comprend, avant l'étape de soudage, une étape de formation d'une surépaisseur (19) interne destinée à s'étendre vers l'intérieur de la boule (1).

2. Procédé selon la revendication 1, dans lequel les deux coquilles (2) hémisphériques comprennent un acier inoxydable austénitique.

3. Procédé selon la revendication 1 ou 2, dans lequel avant l'étape de soudage, le procédé comprend une étape de galetage d'un plan de joint (8) orthogonal à l'axe (A) de révolution de chaque coquille (2) hémisphérique.

4. Procédé selon l'une des revendications 1 à 3, dans lequel l'étape de positionnement comprend l'emboîtement d'une surépaisseur (18) de positionnement sur la face (4) externe de chaque coquille (2) hémisphérique dans un logement (22) de forme complémentaire d'une pièce (24) de support.

5. Procédé selon la revendication 4 lorsqu'elle dépend de la revendication 3, dans lequel les surépaisseurs (18) sont formées pendant l'étape de galetage du plan de joint (8) de chaque coquille (2) hémisphérique.

6. Procédé selon l'une des revendications 1 à 5, dans lequel l'étape de soudage comprend l'émission d'un faisceau (14) laser fixe et la mise en rotation de la boule (1) autour de l'axe (A) de révolution des coquilles (2) hémisphériques.

7. Procédé selon l'une des revendications 1 à 6, dans lequel l'étape de soudage comprend l'émission d'un faisceau (14) laser orthogonal au plan tangent au point d'impact du faisceau (14) laser sur la boule (1).

8. Procédé selon l'une des revendications 1 à 7, dans lequel l'étape de soudage comprend l'émission d'un faisceau (14) laser par une torche (16) de soudure laser, et le déclenchement de l'émission du faisceau (14) laser est postérieure au déclenchement d'un déplacement relatif de la boule (1) et de la torche (16) de soudure laser.

9. Procédé selon l'une des revendications 1 à 8, dans lequel le procédé comprend une étape de calibrage destinée à uniformiser une cote entre un sommet et un plan de joint (8) de chaque coquille (2) hémisphérique.

10. Procédé selon l'une des revendications 1 à 9, dans lequel l'étape d'obtention de deux coquilles (2) hémisphériques comprend une étape d'écrouissage des coquilles (2) au moment de leur mise en forme.

## Patentansprüche

1. Verfahren zur Herstellung einer Spielkugel (1), umfassend die Schritte:
- des Erhaltens von zwei halbkugelförmigen Schalen (2),
- des Positionierens der zwei halbkugelförmigen Schalen (2) gegeneinander, um die Kugel (1) zu bilden, und
- des Verschweißens der zwei halbkugelförmigen Schalen (2), wobei der Schritt des Verschweißens ein Schritt des Laserschweißens ist,
**dadurch gekennzeichnet, dass** das Verfahren vor dem Schritt des Verschweißens einen Schritt des Bildens einer inneren Verdickung (19) umfasst, die dazu vorgesehen ist, sich zur Innenseite der Kugel (1) hin zu erstrecken.

2. Verfahren nach Anspruch 1, wobei die zwei halbkugelförmigen Schalen (2) einen austenitischen Edelstahl umfassen.

3. Verfahren nach Anspruch 1 oder 2, wobei das Verfahren vor dem Schritt des Verschweißens einen Schritt des Glattwalzens einer Fügeebene (8) orthogonal zur Drehachse (A) jeder halbkugelförmigen Schale (2) umfasst.

4. Verfahren nach einem der Ansprüche 1 bis 3, wobei der Schritt des Positionierens das Einpassen einer Positionierungsverdickung (18) an der Außenfläche (4) jeder halbkugelförmigen Schale (2) in eine Aufnahme (22) von komplementärer Form eines Halteteils (24) umfasst.

5. Verfahren nach Anspruch 4 in Abhängigkeit von Anspruch 3, wobei die Verdickungen (18) während des Schritts des Glattwalzens der Fügeebene (8) jeder halbkugelförmigen Schale (2) gebildet werden.

6. Verfahren nach einem der Ansprüche 1 bis 5, wobei der Schritt des Verschweißens das Abgeben eines festen Laserstrahls (14) und das Rotieren der Kugel (1) um die Drehachse (A) der halbkugelförmigen Schalen (2) herum umfasst.

7. Verfahren nach einem der Ansprüche 1 bis 6, wobei der Schritt des Verschweißens das Abgeben eines Laserstrahls (14) orthogonal zur Ebene, die zum Auftreffpunkt des Laserstrahls (14) auf der Kugel (1) tangential ist, umfasst.

8. Verfahren nach einem der Ansprüche 1 bis 7, wobei der Schritt des Verschweißens das Abgeben eines Laserstrahls (14) über einen Laser-Schweißbrenner (16) umfasst, und das Auslösen der Abgabe des Laserstrahls (14) nach dem Auslösen einer Relativbewegung der Kugel (1) und des Laser-Schweißbrenners (16) erfolgt.

9. Verfahren nach einem der Ansprüche 1 bis 8, wobei das Verfahren einen Schritt des Kalibrierens umfasst, der dazu vorgesehen ist, eine Kote zwischen einer Spitze und einer Fügeebene (8) jeder halbkugelförmigen Schale (2) zu vereinheitlichen.

10. Verfahren nach einem der Ansprüche 1 bis 9, wobei der Schritt des Erhaltens von zwei halbkugelförmigen Schalen (2) einen Schritt des Kaltumformens der Schalen (2) zum Zeitpunkt ihrer Formgebung umfasst.

## Claims

1. A method for manufacturing a gaming ball (1), comprising the steps of:
- obtaining two hemispherical shells (2),
- positioning the two hemispherical shells (2) against each other so as to form the ball (1), and
- welding the two hemispherical shells (2), wherein the welding step is a laser welding step,
**characterized in that** the method comprises, before the welding step, a step of forming an inner overthickness (19) intended to extend towards the inside of the ball (1).

2. The method according to claim 1, wherein the two hemispherical shells (2) comprise an austenitic stainless steel.

3. The method according to claim 1 or 2, wherein before the welding step, the method comprises a step of roller burnishing of a mating surface (8) orthogonal to the axis of revolution (A) of each hemispherical shell (2).

4. The method according to any of claims 1 to 3, wherein the positioning step comprises the nesting of a positioning overthickness (18) on the outer face (4) of each hemispherical shell (2) in a housing (22) with a shape complementary to a support part (24).

5. The method according to claim 4 when it depends on claim 3, wherein the overthicknesses (18) are formed during the step of roller burnishing the mating surface (8) of each hemispherical shell (2).

6. The method according to any of claims 1 to 5, wherein the welding step comprises the emission of a fixed laser beam (14) and the rotation of the ball (1) about the axis of revolution (A) of the hemispherical shells (2).

7. The method according to any of claims 1 to 6, wherein the welding step comprises the emission of a laser beam (14) orthogonal to the plane tangent to the point of impact of the laser beam (14) on the ball (1).

8. The method according to any of claims 1 to 7, wherein the welding step comprises the emission of a laser beam (14) by a laser welding torch (16), and the triggering of the emission of the laser beam (14) is posterior to the triggering of a relative displacement of the ball (1) and the laser welding torch (16).

9. The method according to any of claims 1 to 8, wherein the method comprises a calibration step intended to uniformize a dimension between an apex and a mating surface (8) of each hemispherical shell (2).

10. The method according to any of claims 1 to 9, wherein the step of obtaining two hemispherical shells (2) comprises a step of work-hardening the shells (2) at the time of the shaping thereof.
